# EUROPÄISCHE PATENTSCHRIFT

(11) **EP 3 730 027 B1**
(45) Veröffentlichungstag und Bekanntmachung des Hinweises auf die Patenterteilung: **04.11.2026**
(21) Anmeldenummer: 20168156.6
(22) Anmeldetag: 06.04.2020
(51) Int. Cl.: A47L 15/42, D06F 39/08, D06F 39/00, D06F 39/10

(54) **WASSERFÜHRENDES HAUSHALTSGERÄT UND VERFAHREN ZU SEINEM BETRIEB**
WATER-CONTAINING HOUSEHOLD APPLIANCE AND METHOD FOR ITS OPERATION
APPAREIL MÉNAGER CONTENANT DE L'EAU ET SON PROCÉDÉ DE FONCTIONNEMENT

(30) Priorität: 25.04.2019 DE 102019205919
(43) Veröffentlichungstag der Anmeldung: 28.10.2020
(73) Patentinhaber: E.G.O. Elektro-Gerätebau GmbH, 75038 Oberderdingen (DE)
(72) Erfinder: Albert, Tobias, 76703 Kraichtal (DE); Kögel, Uwe, 75057 Kürnbach (DE); Schaumann, Uwe, 75038 Oberderdingen (DE)
(74) Vertreter: Patentanwälte Ruff, Wilhelm, Beier, Dauster & Partner mbB

(56) Entgegenhaltungen:
- GB-A- 2 176 696
- US-A1- 2012 118 336

## Beschreibung

### ANWENDUNGSGEBIET UND STAND DER TECHNIK

Die Erfindung betrifft ein wasserführendes Haushaltsgerät, insbesondere eine Waschmaschine oder eine Geschirrspülmaschine. Ebenso betrifft die Erfindung ein Verfahren zum Betrieb eines solchen wasserführenden Haushaltsgeräts.

Aus der EP 2785236 A1 ist eine Waschmaschine bekannt mit einer Wasserführung mittels Wasserleitungen, bei der ein Partikelfilter vorgesehen ist, der zu seiner Reinigung rückgespült werden kann.

Aus der EP 2 862 494 A1 ist ein wasserführendes Haushaltsgerät bekannt mit einer Behandlungskammer, in deren unterem Bereich ein Sumpf auf bekannte Art und Weise vorgesehen ist. Direkt unterhalb des Sumpfes ist daran anschließend eine Impellerpumpe vorgesehen, die durch den geringen Abstand in vertikaler Richtung die Bauhöhe minimieren soll. Des Weiteren ist so eine Wasserführung vereinfacht, weil keine Wasserleitungen dazwischen vorgesehen sein müssen.

Aus der US 2012/0118336 A1 ist ein wasserführendes Haushaltsgerät in Form einer Geschirrspülmaschine bekannt mit einer Wasserführung samt Wasserleitungen von einer Behandlungskammer weg und hin zu der Behandlungskammer. Gemäß Absatz 22 ist in einer möglichen Ausgestaltung eine einzige Pumpe vorgesehen, welche einen Pumpeneinlass und einen Pumpenauslass aufweist. Des Weiteren sind ein Feinfilter sowie ein Grobfilter in Form eines großen Siebes vorgeschaltet. Das Sieb hält größere Teile bzw. Grobteile fern, der Feinfilter soll insbesondere Fasern zurückhalten können.

Aus der GB 2 176 696 A ist eine weitere Geschirrspülmaschine als wasserführendes Haushaltsgerät bekannt, bei der offenbar Wasser aus dem Sumpf einer Behandlungskammer mittels eines Siebes grob gefiltert werden kann, auch wenn dies in der Beschreibung nicht explizit erwähnt ist. Dieses Wasser kann zu einer Kreiselpumpe geführt sein, welche über eine spezielle Wasserführung Wasser aus dem Sumpf ansaugen und aus dem Haushaltsgerät herauspumpen kann, ohne dass dieses Wasser durch die Pumpe selbst fließen muss. Dazu ist eine Art Venturi-Düse vorgesehen. So können auf dem Sieb aufliegende und sozusagen herausgefilterte Grobteile aus der Geschirrspülmaschine entfernt werden, ohne dass sie durch die Pumpe hindurchgehen können oder müssen.

### AUFGABE UND LÖSUNG

Der Erfindung liegt die Aufgabe zugrunde, ein eingangs genanntes wasserführendes Haushaltsgerät sowie ein Verfahren zu dessen Betrieb zu schaffen, mit denen Probleme des Standes der Technik gelöst werden können und es insbesondere möglich ist, ein solches Haushaltsgerät vorteilhaft aufzubauen mit möglichst wenigen aufwändigen und gegebenenfalls wartungsanfälligen Komponenten sowie den Betrieb vielfältig ausgestalten zu können.

Gelöst wird diese Aufgabe durch ein wasserführendes Haushaltsgerät mit den Merkmalen des Anspruchs 1 sowie durch ein Verfahren zu seinem Betrieb mit den Merkmalen des Anspruchs 13, 14, 15 und 16. Vorteilhafte sowie bevorzugte Ausgestaltungen der Erfindung sind Gegenstand der weiteren Ansprüche und werden im Folgenden näher erläutert. Dabei werden manche der Merkmale nur für das Haushaltsgerät oder nur für eines der Verfahren beschrieben. Sie sollen jedoch unabhängig davon sowohl für das Haushaltsgerät als auch für eines der Verfahren zu seinem Betrieb selbständig und unabhängig voneinander gelten können. Der Wortlaut der Ansprüche wird durch ausdrückliche Bezugnahme zum Inhalt der Beschreibung gemacht.

Es ist vorgesehen, dass das wasserführende Haushaltsgerät eine Behandlungskammer, die verschließbar ist und in der Gegenstände behandelt werden können, und mindestens einen Kammer-Wassereinlass in die Behandlungskammer aufweist. Unten in der Behandlungskammer oder unter der Behandlungskammer ist mindestens ein Sumpf vorgesehen, an den mindestens ein Sumpf-Wasserauslass anschließen kann, der von dem Sumpf abgeht. Durch ihn kann also Wasser aus dem Sumpf abfließen. Es ist ein Grobteilfilter vorgesehen zum Abscheiden von Grobteilen mit einer Größe ≥ 5 mm aus Wasser in der Behandlungskammer oder aus Wasser, das wie vorgenannt aus dem Sumpf austritt. Dieser weist einen Grobteilfilter-Einlass, einen Grobteilfilter-Wasserauslass und einen Grobteilfiltratauslass auf. Der Grobteilfilter mit seinem Grobteilfilter-Wasserauslass kann auch den vorgenannten Sumpf-Wasserauslass ersetzen, vor allem dann, wenn der Grobteilfilter unten direkt an den Sumpf anschließt bzw. direkt am Sumpf oder sogar unten im Sumpf angeordnet ist.

Des Weiteren ist genau eine einzige Pumpe für das gesamte Haushaltsgerät vorgesehen, die dem Sumpf-Wasserauslass bzw. dem Grobteilfilter-Wasserauslass nachgeschaltet ist, wobei dies vorzugsweise die einzige Pumpe im Wasserkreislauf des Haushaltsgeräts ist. Weitere Pumpen könnten also beispielsweise bei einer Dosierung für Reinigungsmittel vorgesehen sein, die dann aber eben nicht im Wasserkreislauf arbeitet bzw. kein Reinigungswasser oder Abwasser fördert. Die Pumpe weist mindestens einen Pumpeneinlass und mindestens einen Pumpenauslass auf. Das Gerät weist auch noch Wasserleitungen, eine Wasserleitung von dem Grobteilfilter-Wasserauslass zu der Pumpe bzw. zu dem Pumpeneinlass, diverse Ventileinrichtungen sowie einen Abfluss-Auslass aus dem Haushaltsgerät auf.

Durch das Vorsehen einer einzigen Pumpe ist es möglich, sich von üblicherweise zwei Pumpen zu lösen. So kann beispielsweise auf eine sogenannte Laugenpumpe bzw. Auslass-Pumpe verzichtet werden, die üblicherweise hauptsächlich zum Abpumpen von Wasser verwendet wird. Die derzeit nur zum Umwälzen verwendete Pumpe, die vorteilhaft eine Impellerpumpe ist mit axialer Ansaugung und radialem Auslass, wird dann als diese einzige Pumpe verwendet. Neben dem Umwälzen übernimmt sie dann durch geeignete Wasserführung auch die Aufgabe des Abpumpens von Wasser aus dem Haushaltsgerät. Unter dem Begriff einzige Pumpe ist vorteilhaft zu verstehen, dass nur ein einziger Förderer bzw nur ein einziges Pumpenrad vorgesehen ist. Ähnlich kann auch nur ein einziger Pumpenmotor vorgesehen sein.

Der erfindungsgemäße Grobteilfilter kann als sogenannte Grobteil-Falle ausgebildet sein und im unteren Bereich des Sumpfes angeordnet sein, wie diese eigentlich auch für Geschirrspülmaschinen bekannt sind. Vorzugsweise kann der Grobteilfiltratauslass mittels einer Wasserleitung zu dem Abfluss-Auslass führt, wobei der Grobteilfilter-Wasserauslass einen der Sumpf-Wasserauslässe bilden kann.

In Ausgestaltung der Erfindung ist mindestens eine, vorzugsweise sind zumindest einige, der Ventileinrichtungen als Absperrventil ausgebildet bzw. ist mindestens eine, vorzugsweise sind zumindest einige, der Ventileinrichtungen als Drei-Wege-Ventil und/oder als Vier-Wege-Ventil ausgebildet. So kann Wasser nicht nur abgesperrt werden, so dass es nicht durch eine Wasserleitung fließt, sondern der Wasserfluss kann weitgehend frei und vielfältig gelenkt werden. Auch dies ermöglicht es, auf die vorgenannte Laugenpumpe zu verzichten, so dass eine einzige Pumpe für die Wasserführung im Haushaltsgerät ausreicht.

Bei der Erfindung weist das Haushaltsgerät zwei Kammer-Wasserauslässe aus dem Sumpf auf, wobei ein Grobteil-Kammerwasserauslass vom Grobteilfiltratauslass des Grobteilfilters zum Abfluss-Auslass hin abgeht, und wobei ein Normal-Kammerwasserauslass vom Sumpf abgeht, der entweder getrennt von dem Grobteilfilter ist oder der den Grobteilfilter-Wasserauslass bildet. Zum Normal-Kammerwasserauslass tritt Wasser aus dem Sumpf aus, aus dem Grobteile entfernt sind, die im Grobteilfilter zurückbleiben bzw. von diesem ausgefiltert worden sind. In diesem Wasser können noch kleinere Verunreinigungen enthalten sein, die aber die einzige Pumpe nicht beschädigen können weil sie zu klein sind. Sie können ggf. später noch ausgefiltert werden, beispielsweise weil es Mikrofasern sind, die möglichst nicht ins Abwasser gelangen sollen. Zum Grobteil-Kammerwasserauslass können die gesammelten Grobteile aus dem Grobteilfilter herausgespült werden, so dass sie auch aus dem Gerät austreten bzw. entfernt werden. Dies soll aber auf eine Art erfolgen, dass der Wasserweg mit den Grobteilen darin nicht durch die Pumpe verläuft. Das Wasser wird also von der Pumpe in den Grobteilfilter eingebracht und spült die Grobteile zum Grobteil-Kammerwasserauslass aus.

Vorteilhaft ist eine Wasserleitung an dem Grobteilfilter-Wasserauslass und/oder an dem Grobteilfiltratauslass vorgesehen, die jeweils zu dem Abfluss-Auslass führt. So können Wasser und auch Filtrat aus dem Grobteilfilter, also die Grobteile selbst, ausgespült werden aus dem Gerät.

Erfindungsgemäß ist zusätzlich ein Grobfilter für Wasser aus der Behandlungskammer vorgesehen, der einen Grobfiltereinlass, einen Grobfilterwasserauslass für grob gefiltertes Wasser und einen Grobfiltratauslass für Grobfiltrat aufweist. Dieses Grobfiltrat sind Verunreinigungen, die kleiner sind als die Grobteile, also beispielsweise Verunreinigungen mit einer Größe bis zu etwa 1 mm. Der Grobfilter ist an seinem Grobfiltereinlass mittels einer Wasserleitung mit einem vorgenannten Normal-Kammerwasserauslass verbunden. Hinter dem Grobfilterwasserauslass kann eine Wasserleitung wegführen, wobei darin eine Ventileinrichtung vorgesehen sein kann. So kann ein Auslass aus dem Grobfilter Wasser nach Wunsch ausgelassen werden.

Besonders bevorzugt ist der Grobfilter rückspülbar ausgebildet, um Grobfiltrat aus dem Grobfiltratauslass herauszuspülen bzw. zu entfernen, wobei vorzugsweise der Grobfiltratauslass mittels einer Wasserleitung zu dem Abfluss-Auslass aus dem Haushaltsgerät und/oder zu einer Messkammer geführt sein kann. Wasser kann zum Rückspülen bzw. Reinigen des Grobfilters am Grobfilterwasserauslass in den Grobfilter geführt werden, so dass das Grobfiltrat aus dem Grobfiltratauslass zum Abfluss-Auslass austreten kann und so entfernt werden kann.

Vorteilhaft kann ein Feinfilter vorgesehen sein für Wasser aus der Behandlungskammer, der einen Feinfiltereinlass, einen Feinfilterwasserauslass für fein gefiltertes Wasser und einen Feinfiltratauslass für Feinfiltrat aufweisen. Derartige feine Verunreinigungen können kleiner sein als 0,01 mm oder kleiner als 0,1 mm, wobei vorzugsweise damit vor allem vorgenannte Mikrofasern herausgefiltert werden können. Der Feinfilter kann an seinem Feinfiltereinlass mittels einer Wasserleitung mit dem vorgenannten Grobfilterwasserauslass verbunden sein. Vorzugsweise ist der Feinfiltereinlass auch mittels einer Wasserleitung mit dem Pumpenauslass verbunden, so dass aus dem von der Pumpe geförderten Wasser auch direkt fein gefiltert werden kann.

Der Feinfilter ist bevorzugt rückspülbar zur Entfernung von Feinfiltrat daraus aus dem Feinfiltratauslass, so dass dieses zum Einen entfernt werden kann und zum Anderen auch untersucht werden kann. Der Feinfiltratauslass kann mittels einer Wasserleitung zu dem Abfluss-Auslass aus dem Haushaltsgerät und/oder zu einer Messkammer geführt sein. Zum Rückspülen des Feinfilters kann dann Wasser zum Feinfilterwasserauslass in den Feinfilter geführt werden, so dass das Feinfiltrat aus dem Feinfiltratauslass zum Abfluss-Auslass austritt oder zu der Messkammer geführt werden kann zur Untersuchung.

In vorteilhafter Ausgestaltung der Erfindung ist ein Wasserweg mittels Wasserleitungen von dem Kammer-Wasserauslass zu der Pumpe immer über den Grobteilfilter und evtl. noch den vorgenannten Grobfilter geführt. So können der Grobteilfilter-Wasserauslass und evtl. noch der Grobfilterwasserauslass mit dem Pumpeneinlass verbunden sein. Damit kann das gepumpte Wasser sogar noch grobe gefiltert werden, also eine Stufe feiner als im zwingend vorgesehenen Grobteilfilter.

In weiterer Ausgestaltung der Erfindung ist ein Wasserreservoir vorgesehen, das mittels einer Wasserleitung mit dem Kammer-Wassereinlass verbunden ist und/oder mittels einer Wasserleitung mit der Pumpe verbindbar ist und/oder mittels einer Wasserleitung mit einem Grobteilfilter-Einlass des Grobteilfilters verbindbar ist bzw. jeweils verbunden werden kann zum Einleiten von Wasser in den Grobteilfilter zum Ausspülen von darin befindlichen Grobteilen aus dem Grobteilfiltratauslass heraus hin zum Abfluss-Auslass. Für dieses Verbinden können Wasserleitungen und Ventile vorgesehen sein, entweder reine Absperrventile oder Mehr-Weg-Ventile.

Ein solches Wasserreservoir kann auf einem Höhenniveau im Haushaltsgerät angeordnet sein, das über Grobteilfilter, Grobfilter, Feinfilter und/oder Messkammer liegt, vorteilhaft über allen diesen. So kann Wasser von alleine in die genannten Vorrichtungen fließen, ohne dass gepumpt werden muss. Ein solches Wasserreservoir ist auch als sogenannte Wassertasche in Geschirrspülmaschinen bekannt.

Es können mehrere Wasserreservoirs vorgesehen sein, so kann ein erstes Wasserreservoir ein Reinwasser-Reservoir sein und ein zweites Wasserreservoir als Schmutzwasser-Reservoir vorgesehen sein. Das Reinwasser-Reservoir kann zum Rückspülen der Filter ausgebildet sein, und das Schmutzwasser-Reservoir kann für den Behandlungsvorgang vorgesehen sein.

Der Grobfilterwasserauslass und/oder der Feinfilterwasserauslass können mittels eines Drei-Wege-Ventils oder eines Vier-Wege-Ventils zu dem Wasserreservoir geführt sein, insbesondere zu dem vorgenannten Reinwasser-Reservoir. Er kann auch zu der Behandlungskammer geführt sein, wobei vorteilhaft bei einem Drei-Wege-Ventil ein erster Weg zu dem Wasserreservoir und ein anderer zweiter Weg zu der Behandlungskammer führen können.

Ein vorgenanntes Wasserreservoir, insbesondere das vorgenannte Reinwasser-Reservoir, kann mit zwei Wasserleitungen verbunden sein bzw. zwei Wasserleitungen können zu ihm geführt sein. Eine erste Wasserleitung kann über eine Ventileinrichtung zu dem Grobfilterwasserauslass und/oder dem Feinfilterwasserauslass führen. Eine zweite Wasserleitung kann über eine Ventileinrichtung an den Grobfilter, den Feinfilter und/oder die Pumpe führen, vorzugsweise mittels eines Drei-Wege-Ventils oder mittels eines Vier-Wege-Ventils an alle drei Funktionseinheiten führen, und zwar besonders vorteilhaft direkt oder indirekt.

In weiterer Ausgestaltung kann das Wasserreservoir mittels zwei Ventileinrichtungen mit dem Grobfilterwasserauslass, mit dem Feinfilterwasserauslass und/oder mit dem Pumpeneinlass verbunden werden. So kann entsprechend gefiltertes Wasser in das Wasserreservoir eingeführt werden oder Wasser daraus herausgepumpt werden.

Wie zuvor genannt kann das Haushaltsgerät eine Messkammer aufweisen, um darin Wasser und/oder Filtrat untersuchen zu können. Die Messkammer kann einen Messkammereinlass aufweisen, mit dem sie mit Grobfiltratauslass und/oder mit dem Feinfiltratauslass verbunden werden kann. So können darin Feinfiltrat oder Grobfiltrat untersucht werden. Hierzu wird explizit verwiesen auf die deutsche Patentanmeldung DE 10 2019 203 809.3 mit Anmeldetag vom 20. März 2019 derselben Anmelderin.

Die Messkammer kann einen Messkammereinlass aufweisen, der mittels Wasserleitungen und einer Ventileinrichtung mit dem Grobfilterwasserauslass und/oder mit dem Feinfilterwasserauslass verbunden ist, insbesondere auch mit dem Grobfiltratauslass und/oder mit dem Feinfiltratauslass. So kann das jeweilige Filtrat darin eingebracht werden zur Untersuchung. Des Weiteren kann darin auch beispielsweise fein gefiltertes Wasser untersucht werden, um festzustellen, ob es auch tatsächlich ausreichend bzw. fein genug gefiltert ist. Ein Messkammerauslass kann mittels einer Wasserleitung zu dem Abfluss-Auslass aus dem Haushaltsgerät führen, um so die Messkammer wieder zu reinigen bzw. zu leeren.

Die Pumpe ist hinter dem Grobteilfilter-Wasserauslass angeordnet, insbesondere hinter dem Grobteilfilter-Wasserauslass und hinter dem Grobfilterwasserauslass. Alternativ kann sie hinter dem Grobteilfilter-Wasserauslass und vor dem Grobfiltereinlass angeordnet sein, dann können auch die Verunreinigungen in die Pumpe gelangen, die ansonsten erst im Grobfilter entfernt werden. Die Pumpe kann dann auch zwischen dem Grobteilfilter-Wasserauslass und dem Grobfiltereinlass angeordnet sein.

Bei einem erfindungsgemäßen Verfahren zum Betrieb eines solchen erfindungsgemäßen wasserführenden Haushaltsgeräts ist vorgesehen, dass zum Umwälzen von Wasser darin beim Behandeln von Gegenständen in der Behandlungskammer Wasser zum Grobteilfilter-Wasserauslass aus dem Sumpf austritt. Es fließt durch den Grobteilfilter und durch die Pumpe und wird von der Pumpe wieder zurück zum Kammer-Wassereinlass in die Behandlungskammer und/oder in den mindestens einen Spülarm einer Geschirrspülmaschine und somit in die Behandlungskammer gepumpt. Dabei wird das Wasser beim Austreten immer über den Grobteilfilter geführt, so dass Grobteile immer aus dem Wasser entfernt werden, bevor dieses durch die Pumpe fließt zum Schutz der Pumpe.

Zum Entfernen der Grobteile aus dem Grobteilfilter bzw. aus dem Haushaltsgerät beim Behandeln von Gegenständen in der Behandlungskammer, zum Abpumpen von Wasser aus dem Sumpf und zum Reinigen der Grobteilfalle kann Wasser über den Grobteilfiltereinlass in den Grobteilfilter hineingepumpt werden und samt darin enthaltenen Grobteilen zum Grobteilfiltratauslass herausgeführt werden, die dann hin zum Abfluss-Auslass aus dem Haushaltsgerät gespült werden. Der Wasserfluss kann also umgekehrt werden, und so der Grobteilfilter gereinigt werden. Dazu kann das Wasser mittels der Pumpe zum Grobteilfiltereinlass hineingepumpt werden, wobei das Wasser von einem Frischwasseranschluss des Haushaltsgeräts nach außen oder von dem vorgenannten Wasserreservoir angesaugt werden kann.

Zum Abpumpen von Wasser aus dem Sumpf beim Behandeln von Gegenständen in der Behandlungskammer kann Wasser vorzugsweise von der Pumpe am Grobteilfilter-Wasserauslass des Sumpfes angesaugt werden. Dann kann es durch den Grobteilfilter und die Pumpe zum Abfluss-Auslass aus dem Haushaltsgerät herausgepumpt werden.

Zum Entfernen der Grobteile aus dem Grobteilfilter bzw. aus dem Haushaltsgerät beim Behandeln von Gegenständen in der Behandlungskammer kann Wasser aus dem Wasserreservoir angesaugt werden. Es kann dann durch die Pumpe in den Grobteilfilterwasserauslass des Grobteil-Filters hineingepumpt werden, so dass das Wasser samt darin gesammelten Grobteilen zum Grobteilfilterauslass aus dem Grobteilfilter austritt und mittels Wasserleitungen zum Abfluss-Auslass aus dem Haushaltsgerät gepumpt wird.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen-Überschriften und einzelne Abschnitte beschränkt die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Funktionsansicht einer Geschirrspülmaschine mit einer einzigen Pumpe und Wasserführung für ein Umwälzen des Wassers,
- Fig. 2: die Geschirrspülmaschine aus Fig. 1 mit Möglichkeiten für die Wasserführung zum Rückspülen eines Grobteilfilters zum Entfernen von darin enthaltenen Grobteilen bzw. Grobteilfiltrat,
- Fig. 3: eine Schnittdarstellung durch einen Sumpf der Geschirrspülmaschine aus Fig. 1 mit Grobteilfilter und einer Möglichkeit zum Rückspülen,
- Fig. 4: eine Darstellung einer Wasserführung für eine Waschmaschine mit Grobteilfilter unten an einem Sumpf, einer einzigen Pumpe und zwei weiteren Filtern im Umwälzbetrieb,
- Fig. 5: die Waschmaschine aus Fig. 4 mit Wasserführung zum Abpumpen von Wasser aus der Waschmaschine und
- Fig. 6: die Waschmaschine aus Fig. 5 beim Rückspülen des Grobteilfilters mittels Wasser aus einem Wasserreservoir.

### DETAILLIERTE BESCHREIBUNG DER AUSFÜHRUNGSBEISPIELE

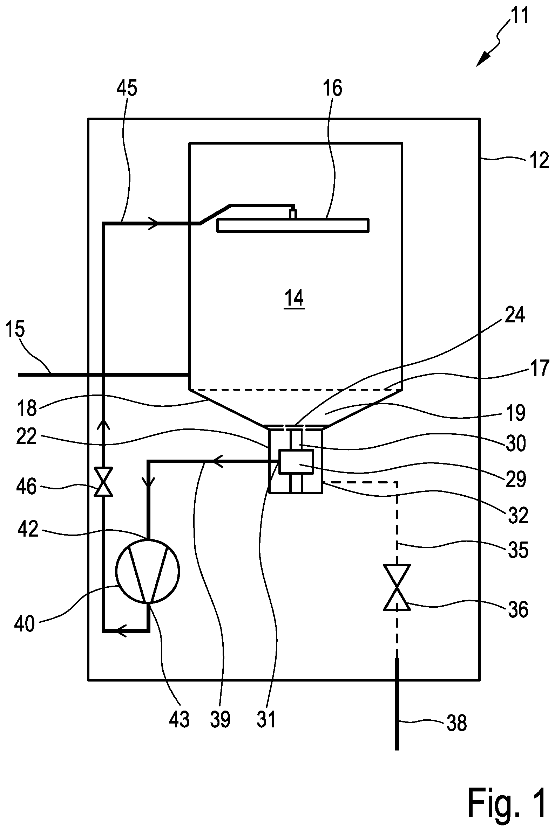

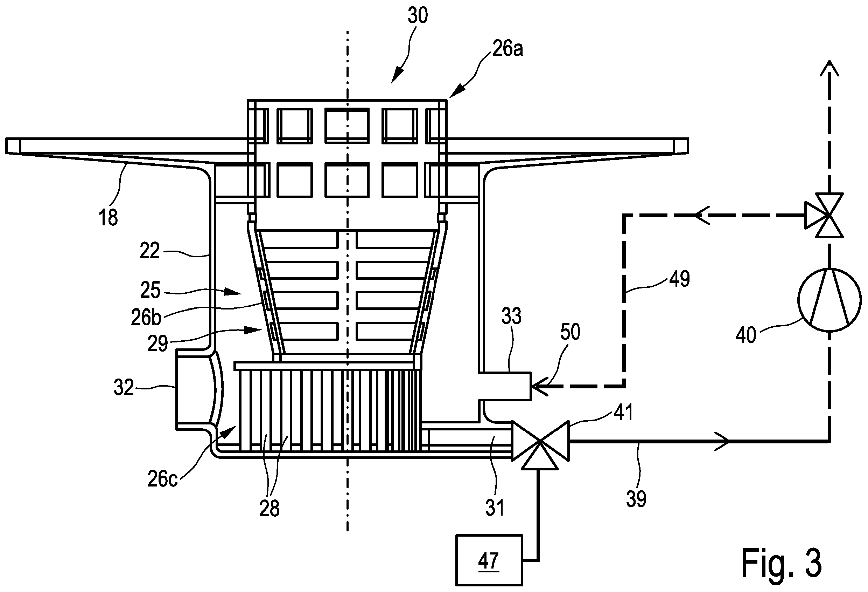

In der Fig. 1 ist eine Geschirrspülmaschine 11 sehr vereinfacht dargestellt mit einem Gehäuse 12 und einer Behandlungskammer 14 darin. In diese führt im unteren Bereich ein Wassereinlass 15, vorteilhaft von einem Wasserhahn zum Zuführen von Frischwasser. Die Behandlungskammer 14 weist einen üblichen Spülarm 16 auf, vorteilhaft mehrere davon, die unterschiedlich angeordnet sind. Unten weist die Behandlungskammer 14 einen Boden 17 auf, unter dem sich ein von einer Vertiefung 18 gebildeter Sumpf 19 befindet. Der Sumpf 19 kann nach oben mittels eines Lochblechs odgl. abgeschlossen sein, auf dem große Teile und vor allem auch Besteck liegen bleiben. Mittelgroße Öffnungen oder eine zentrale Öffnung führen aber, wie nachfolgend in der Fig. 3 noch dargestellt wird, in den Sumpf 19 hinein zum Sammeln von Grobteilen. Hier in der Fig. 1 ist ein Siebfilter 24 schematisch dargestellt im Sumpf 19, der den Übergang zu einem nach unten anschließenden Zylinderabschnitt 22 bildet. In diesem Zylinderabschnitt 22 befindet sich ein Grobteilfilter 29, der einen Grobteilfilter-Einlass 30, einen Grobteilfilter-Wasserauslass 31 und einen Grobteilfiltratauslass 32 aufweist. Dieser Grobteilfilter 29 ist allgemein auch als Grobteilfalle bekannt und wird in Fig. 3 im Detail näher erläutert.

Der Grobteilfilter-Einlass 30 geht nach oben und ist vorteilhaft mit einer Öffnung von 1 cm bis 3 cm durch den Siebfilter 24 zugänglich. So können hier beispielsweise Kirschkerne als Grobteile in den Grobteilfilter 29 gelangen. Der Grobteilfilter-Wasserauslass 31 führt nach links weg mittels einer Pumpenleitung 39. Der Grobteilfiltratauslass 32 geht nach unten bis zu einem Boden des Zylinderabschnitts 22. Von dort geht er mittels einer Auslassleitung 35 und einem Ventil 36 zu einem Abfluss-Auslass 38 aus der Geschirrspülmaschine 11.

Die Pumpenleitung 39 geht zu einer Pumpe 40, welche erfindungsgemäß als die einzige Pumpe der gesamten Geschirrspülmaschine 11 ausgebildet ist. Vorteilhaft ist sie eine Impellerpumpe. Die Pumpe 40 weist einen Pumpeneinlass 42 auf, an den die Pumpenleitung 39 führt, sowie einen Pumpenauslass 43, der mittels einer Spülarmleitung 45 samt einem Ventil 46 mit dem Spülarm 16 verbunden ist. Sowohl in der Pumpenleitung 39 als auch in der Spülarmleitung 45 sind vorteilhaft Ventile vorgesehen, entweder reine Absperrventile oder besonders vorteilhaft Mehr-Weg-Ventile, um das Wasser aus der Pumpe 40 auch anders zu leiten.

Mit dem hier durch die mit Pfeilen und durchgezogener Linie dargestellten Wasserweg durch die Pumpenleitung 39, die Pumpe 40 und die Spülarmleitung 45 kann ein Umwälzbetrieb und somit ein Spülen von Gegenständen in der Behandlungskammer 14 durchgeführt werden. Vorteilhaft weist die Pumpe 40 eine eingebaute bzw. integrierte Heizung auf, so dass dabei das Wasser auch erwärmt werden kann. Eine ansonsten bekannte separate Heizung unten im Sumpf 19 ist dann nicht notwendig.

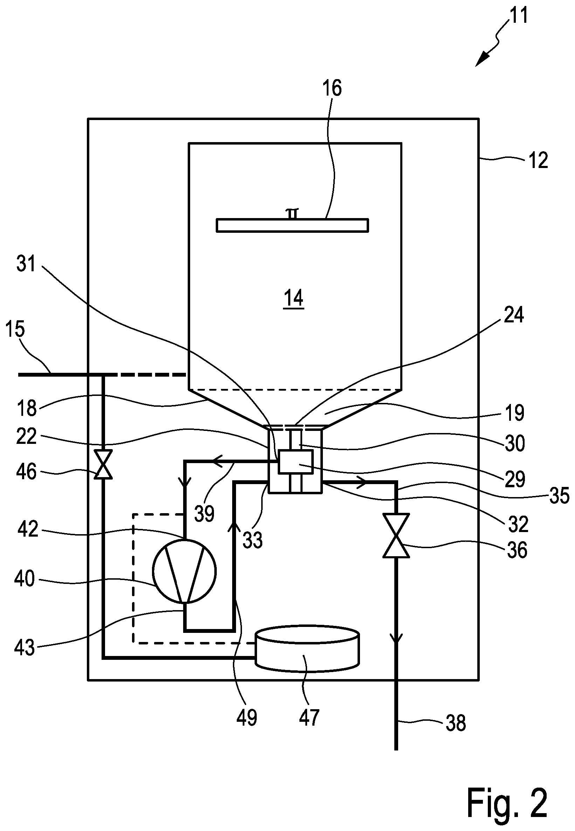

In der Fig. 2 ist dargestellt, wie eine Wasserführung gestaltet ist, damit mittels der einzigen Pumpe 40 der Grobteilfilter 29 gesäubert werden kann bzw. darin zurückgehaltene Grobteile wie beispielsweise vorgenannte Kirschkerne aus der Geschirrspülmaschine 11 entfernt werden können. Diese könnten einerseits zwar auch oben im Sumpf 19 oder auf dem Sumpf 19 gesammelt werden, beispielsweise mittels eines vorgenannten Lochblechs odgl.. Von dort könnten sie zwar relativ einfach manuell entfernt werden. Aus Hygienegründen und Komfortgründen soll dies aber vermieden werden. Im Stand der Technik ist zum Abpumpen von Wasser aus der Geschirrspülmaschine 11 eine sogenannte Laugenpumpe vorgesehen, die als einfache Flügelradpumpe ausgebildet sein und somit auch die genannten Grobteile beim Herauspumpen direkt fördern kann, ohne dabei beschädigt zu werden. Mit einer komplexer ausgebildeten und mit mehr Funktionen versehenen Pumpe, die die einzige Pumpe 40 der Geschirrspülmaschine bilden soll, ist dies nicht möglich. Deswegen ist in der Fig. 2 dargestellt, wie mittels der einzigen Pumpe 40 durch die mit Pfeilen verdeutlichte Wasserführung der Grobteilfilter 29 gereinigt werden kann. Hierfür weist er einen Grobteilfilter-Spüleinlass 33 auf. Wasser kann entweder aus dem Sumpf 19 über den Grobteilfilter 29, den Grobteilfilter-Wasserauslass 31, die Pumpenleitung 39, die einzige Pumpe 40 und eine Spülleitung 49 in diesen Grobteilfilter-Spüleinlass 33 eingebracht werden. Dort reißt das Wasser dann im Grobteilfilter 29 gesammelte und aus dem Wasser zurückgehaltene Grobteile wie beispielsweise vorgenannte Kirschkerne mit und spült diese zum Grobteilfiltratauslass 32 heraus in die Auslassleitung 35. Durch das geöffnete Ventil 36 können sie somit zum Abfluss-Auslass 38 aus der Geschirrspülmaschine 11 herausgespült werden. Die durchgezogen dargestellte Wasserführung wird im Vergleich zu derjenigen aus Fig. 1 durch hier nicht dargestellte Ventile erreicht, die leicht vorstellbar sind.

Hier in der Fig. 2 ist ein Wasserreservoir 47 dargestellt, das mittels einer Wasserleitung und einem Ventil 46 mit dem Wassereinlass 15 in die Geschirrspülmaschine 11 verbunden sein kann. So kann in dem Wasserreservoir 47 Frischwasser gespeichert werden. Alternativ kann auch gefiltertes Wasser von der Pumpe 40 in das Wasserreservoir 47 eingebracht werden, wie es aus der vorgenannten deutschen Patentanmeldung DE 10 2019 203 809.3 bekannt ist, auf welche diesbezüglich explizit verwiesen wird. Vor allem kann das Wasser hierfür, wie nachfolgend noch erläutert wird, mehrfach gefiltert werden. So kann auch beispielsweise Wasser aus dem letzten Spülvorgang von Geschirr in der Behandlungskammer 14, in dem möglicherweise etwas Klarspüler enthalten ist, in dem Wasserreservoir 47 gespeichert werden. Beim nächsten Spülvorgang in der Geschirrspülmaschine 11 kann es dann zu Beginn benutzt werden, um grobe Verunreinigungen von dem Geschirr zu entfernen, hierfür ist kein sauberes Frischwasser nötig.

Des Weiteren kann Wasser aus dem Wasserreservoir 47 auch genutzt werden, um von der Pumpe 40 angesaugt zu werden und um dann ebenfalls den Grobteilfilter 29 rückzuspülen. Hier kann dann die Wasserführung wie gestrichelt dargestellt vom Wasserreservoir 47 über nicht dargestellte Ventile zur Pumpe 40 bzw. zu dem Pumpeneinlass 42 führen. Für dieses Rückspülen bzw. Reinigen des Grobteilfilters 29 wird nämlich nicht zwingend Frischwasser benötigt. Das Entfernen von Grobteilen aus dem Grobteilfilter 29 kann vorteilhaft am Ende des Spülvorgangs stattfinden. Hierfür kann aber auch, wie die durchgezogen dargestellte Wasserführung veranschaulicht, Wasser aus dem Sumpf 19 genommen werden, welches ansonsten ohnehin zum Abfluss-Auslass 38 abgepumpt werden würde. Am Ende des Spülvorgangs ist in der Regel auch nicht mehr damit zu rechnen, dass sich noch Grobteile in der Behandlungskammer 14 befinden, die nicht im Grobteilfilter 29 aufgefangen worden sind.

Die Fig. 3 zeigt eine konstruktive Ausgestaltung eines solchen Sumpfs 19 für die zuvor dargestellte Geschirrspülmaschine bzw. allgemein ein erfindungsgemäßes wasserführendes Haushaltsgerät. Auf eine Fläche oberhalb der Vertiefung 18 könnte ein vorgenanntes Lochblech oder Gitter aufgelegt werden, dessen Fläche nur von einem Oberteil 26a eines Gittereinsatzes 25 durchstoßen wird. Hier befinden sich gut erkennbar große Öffnungen, durch welche die genannten Grobteile wie beispielsweise Kirschkerne eintreten können, aber kein Geschirr bzw. Besteck. In einem Mittelteil 26b sind schlitzartige Öffnungen vorgesehen, durch welche Grobteile wiederum nicht aus dem Gittereinsatz 25 entweichen können, so dass sie nach unten fallen in den Unterteil 26c. Dort ist dann die sogenannte Grobteilfalle durch Gitterstäbe 28 gebildet, welche so angeordnet sind, dass sie in Draufsicht eine Art U bilden. Die Enden der Schenkel dieses U reichen direkt an die Wandung des Zylinderabschnitts 22 heran. Nach rechts geht ein Grobteilfilter-Wasserauslass 31, der zu der schematisch dargestellten einzigen Pumpe 40 führt. Hier ist auch ein Drei-Wege-Ventil 41 dargestellt, welches beispielsweise mit dem Wasserreservoir 47 verbunden ist und eben auch mit der Wasserleitung 39 zur Pumpe 40. Durch die Gitter 28 der Grobteilfalle können die Grobteile hier nicht nach rechts zum Grobteilfilter-Wasserauslass 31 entweichen. Der Gittereinsatz 25 bildet also zusammen mit der Grobteilfalle 28 unten den zuvor beschriebenen Grobteilfilter 29.

Vom Zylinderabschnitt 22 geht nach links ein Grobteilfiltratauslass 32 ab als eine Art Rohrstutzen, an den sich die Auslassleitung 35 anschließen kann. Von rechts führt der Grobteilfilter-Spüleinlass 33 in den Zylinderabschnitt 22 und hin zum Grobteilfilter 29, und zwar mittels der Spülleitung 49. Wird von der Pumpe 40, wie zuvor erläutert, Wasser hier hineingepumpt, welches vorteilhaft aus dem Wasserreservoir 47 kommt, so werden die Grobteile aus dem Unterteil 26c bzw. der Grobteilfalle 28 mit dem Wasser zum Grobteilfiltratauslass 32 herausgespült. Sie verlassen dann über die Auslassleitung 35, das Ventil 36 und den Abfluss-Auslass 38 die Geschirrspülmaschine 11.

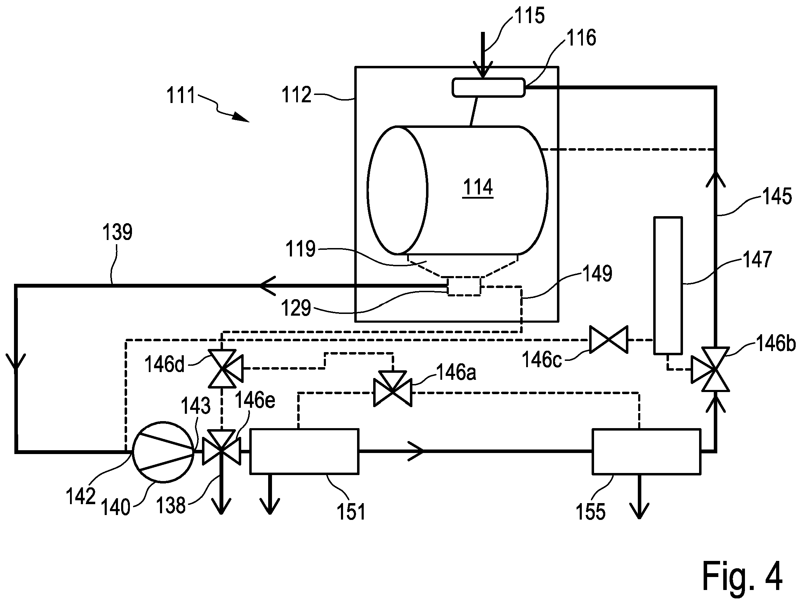

In den Fig. 4 bis 6 ist für eine Waschmaschine 111 als erfindungsgemäßes Haushaltsgerät mit einem Gehäuse 112 dargestellt, wie eine Wasserführung ausgebildet sein kann. Hier sind neben einem vereinfacht dargestellten Grobteilfilter 129 unten an einem Sumpf 119 einer Behandlungskammer 114 ein Grobfilter 151 und ein Feinfilter 155 vorgesehen. Der Grobteilfilter 129 samt Sumpf 119 kann ausgebildet sein wie in Fig. 3, allerdings eben auf bekannte Art und Weise unten an der Behandlungskammer 114, in der eine Trommel rotiert für die zu behandelnde Wäsche. Oben über der Behandlungskammer 114 ist eine Waschmittelschublade 116 vorgesehen, in die ein Wassereinlass 115 von außen führt. Außerdem können hier wie üblich Waschmittel und sonstige Mittel eingefüllt werden für den Behandlungsvorgang. In die Waschmittelschublade 116 führt eine Zuleitung 145 über ein Ventil 146b, das als Drei-Wege-Ventil ausgebildet ist.

Wasser aus dem Sumpf 119 fließt durch den Grobteilfilter 129 an einem Pumpeneinlass 142 in eine Pumpe 140 hinein. Zum in Fig. 4 dargestellten Umwälzbetrieb wird das Wasser an einem Pumpenauslass 143 über ein Ventil 146e, einen Grobfilter 151 und einen Feinfilter 155 sowie das Ventil 146b in die vorgenannte Zuleitung 145 und somit in die Waschmittelschublade 116 gepumpt. Von dort aus tritt es automatisch in die Behandlungskammer 114 ein. Alternativ kann Wasser zumindest teilweise auch gemäß der gestrichelt dargestellten Wasserleitung direkt in die Behandlungskammer 114 bzw. auf darin befindliche Wäsche gepumpt werden.

Der Grobfilter 151 und der Feinfilter 155 sind ausgebildet und arbeiten wie zuvor beschrieben. In dem Feinfilter 155 können vor allem Mikrofasern herausgefiltert werden, damit diese nicht ins Abwasser gelangen können. Die Entsorgung kann dann beispielsweise manuell erfolgen. Von beiden Filtern geht ein Pfeil nach unten, entweder zur Entsorgung oder in eine ebenfalls zuvor beschriebene Messkammer, um das jeweilige Filtrat oder das jeweils gefilterte Wasser untersuchen zu können. Die Filter 151 und 155 können je nach Bedarf über die Ventile 146a bis e auch umgangen werden.

Über das Ventil 146b und/oder das Ventil 146c kann mittels der Pumpe 140 Wasser auch in ein Wasserreservoir 147 eingespeichert werden. Daraus kann es bei Bedarf entnommen werden, wie zuvor beschrieben.

Das in die Pumpe 140 gelangende Wasser ist stets vom Grobteilfilter 129 grob gefiltert, so dass die Pumpe 140 nicht durch Grobteile beschädigt werden kann, die natürlich auch in einer Waschmaschine 111 auftreten können.

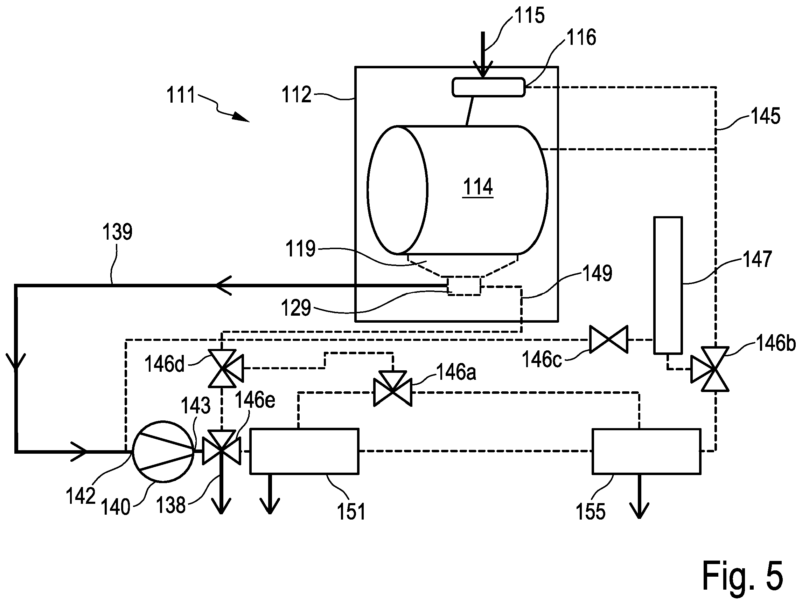

In Fig. 5 ist dargestellt, wie die Pumpe 140 Wasser aus der Behandlungskammer 114 abgepumpt werden kann zu einem Abfluss-Auslass 138 heraus. Das Wasser fließt durch den Grobteilfilter 129 und durch die Pumpenleitung 139 zur Pumpe 140 und von dieser über das Ventil 146e zum Abfluss-Auslass 138. Das Wasser könnte aber auch noch im Grobfilter 151 und/oder im Feinfilter 155 gefiltert werden vor dem Abpumpen.

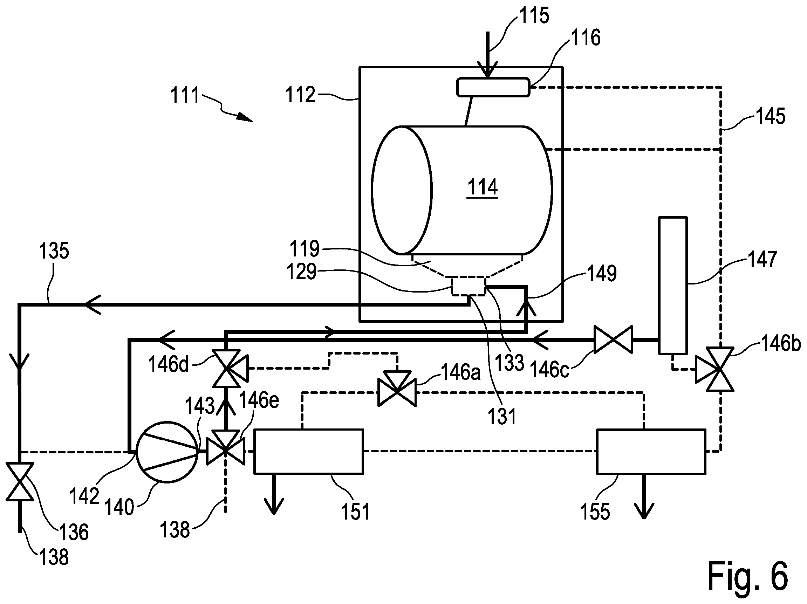

In der Fig. 6 ist dargestellt, wie Grobteile aus der Grobteilfalle 129 entsprechend wie in Fig. 3 entfernt werden können. Hier wird Wasser aus dem Wasserreservoir 147 über das Ventil 146c angesaugt, wobei das Wasser vorher in das Wasserreservoir 147 gespeichert worden ist, beispielsweise von einem der letzten Spülvorgänge in der Waschmaschine 111, welches also nur leicht verschmutzt ist. Die Pumpe 140 pumpt dieses Wasser dann über die Ventile 146e und 146d und durch die Spülleitung 149 in den Grobteilfilter 129 hinein, und zwar zu einem nicht dargestellten Grobteilfilter-Spüleinlass 133 hinein. Dies entspricht eben wieder der Fig. 3. Die dort angesammelten Grobteile werden dann zu einem Grobteilfiltratauslass 132 durch eine Auslassleitung 135 und ein Ventil 136 zum Abfluss-Auslass 138 aus der Waschmaschine 111 herausgespült.

Somit kann auch bei einer Waschmaschine mit einer einzigen Pumpe 140, die vorteilhaft auch als Impellerpumpe ausgebildet ist und eine Heizeinrichtung integriert aufweisen kann, der Grobteilfilter gereinigt werden. Außerdem kann auch hier auf eine eingangs genannte weitere Laugenpumpe verzichtet werden. Dadurch kann der entsprechende Aufwand eingespart werden.

## Patentansprüche

1. Wasserführendes Haushaltsgerät (11, 111) mit:
- einer Behandlungskammer (14, 114), die verschließbar ist und in der Gegenstände behandelt werden können,
- mindestens einem Kammer-Wassereinlass in die Behandlungskammer (14, 114),
- mindestens einem Sumpf (19, 119) unten in der Behandlungskammer (14, 114) oder unter der Behandlungskammer (14, 114),
- einem Grobteilfilter (29, 129) zum Abscheiden von Grobteilen mit einer Größe ≥ 5 mm aus Wasser in der Behandlungskammer (14, 114) oder aus Wasser, das aus dem Sumpf (19, 119) austritt, wobei der Grobteilfilter (29, 129) einen Grobteilfilter-Einlass (30), einen Grobteilfilter-Wasserauslass (31, 131) und einen Grobteilfiltratauslass (32, 132) aufweist,
- genau einer einzigen Pumpe (40, 140) für das gesamte Haushaltsgerät (11, 111), die dem Sumpf (19, 119) und dem Grobteilfilter-Wasserauslass (31, 131) nachgeschaltet ist, wobei die Pumpe (40, 140) aufweist:
∘ einen Pumpeneinlass (42, 142) und
∘ einen Pumpenauslass (43, 143),
- Wasserleitungen (15, 35, 45, 49, 115, 135, 145, 149),
- Ventileinrichtungen (36, 41, 46, 136, 146),
- einem Abfluss-Auslass (38, 138) aus dem Haushaltsgerät (11, 111),
- einer Wasserleitung (39, 139) von dem Grobteilfilter-Wasserauslass (31, 131) zu der Pumpe (40, 140) bzw. zu dem Pumpeneinlass (42, 142),
- zwei Kammer-Wasserauslässe aus dem Sumpf (19, 119), wobei:
∘ ein Grobteil-Kammerwasserauslass vom Grobteilfiltratauslass (32, 132) des Grobteilfilters (29, 129) zum Abfluss-Auslass (38, 138) hin abgeht,
∘ ein Normal-Kammerwasserauslass vom Sumpf (19, 119) abgeht, der entweder getrennt von dem Grobteilfilter (29, 129) ist oder der den Grobteilfilter-Wasserauslass (31, 131) bildet
**gekennzeichnet durch** einen Grobfilter (151) für Wasser aus der Behandlungskammer (14, 114) mit einem Grobfiltereinlass, mit einem Grobfilterwasserauslass für grob gefiltertes Wasser und mit einem Grobfiltratauslass für Grobfiltrat, wobei der Grobfilter (151) an seinem Grobfiltereinlass mittels einer Wasserleitung (149) mit dem Normal-Kammer-wasserauslass verbunden ist.

2. Haushaltsgerät nach Anspruch 1, **dadurch gekennzeichnet, dass** mindestens eine, vorzugsweise zumindest einige, der Ventileinrichtungen (36, 41, 46, 136, 146) als Absperrventil ausgebildet ist und/oder mindestens eine, vorzugsweise zumindest einige, der Ventileinrichtungen (36, 41, 46, 136, 146) als Drei-Wege-Ventil (41, 146) und/oder als Vier-Wege-Ventil ausgebildet sind.

3. Haushaltsgerät nach Anspruch 1 oder 2, **gekennzeichnet durch** eine Wasserleitung (35) von dem Grobteilfilter-Wasserauslass (31), die zu dem Abfluss-Auslass (38) führt.

4. Haushaltsgerät nach einem der vorhergehenden Ansprüche, **gekennzeichnet durch** eine Wasserleitung (35) von dem Grobteilfiltratauslass (32), die zu dem Abfluss-Auslass (38) führt.

5. Haushaltsgerät nach einem der vorhergehenden Ansprüche, **dadurch gekennzeichnet, dass** der Grobfilter (151) rückspülbar ist zur Entfernung von Grobfiltrat daraus aus dem Grobfiltratauslass, wobei der Grobfiltratauslass mittels einer Wasserleitung zu dem Abfluss-Auslass (138) aus dem Haushaltsgerät (111) und/oder zu einer Messkammer geführt ist.

6. Haushaltsgerät nach einem der vorhergehenden Ansprüche, **dadurch gekennzeichnet, dass** ein Wasserweg mittels Wasserleitungen (39, 139) von dem Sumpf (19, 119) zu der Pumpe (40, 140) immer über den Grobteilfilter (29, 129) und/oder über den Grobfilter (151) geführt ist, wobei der Grobteilfilter-Wasserauslass (31) und/oder der Grobfilterwasserauslass mit dem Pumpeneinlass (42, 142) verbunden ist.

7. Haushaltsgerät nach einem der vorhergehenden Ansprüche, **gekennzeichnet durch** ein Wasserreservoir (47, 147), das mittels einer Wasserleitung mit dem Kammer-Wassereinlass verbindbar ist und/oder mittels einer Wasserleitung mit der Pumpe (40, 140) verbindbar ist und/oder mittels einer Wasserleitung mit einem Grobteilfilter-Einlass (30) des Grobteilfilters (29, 129) verbindbar ist zum Einleiten von Wasser in den Grobteilfilter (29, 129) zum Ausspülen von darin befindlichen Grobteilen aus dem Grobteilfiltratauslass (32, 132) heraus hin zum Abfluss-Auslass (38, 138).

8. Haushaltsgerät nach Anspruch 7, **dadurch gekennzeichnet, dass** ein erstes Wasserreservoir ein Reinwasser-Reservoir ist und ein zweites Wasserreservoir als Schmutzwasser-Reservoir vorgesehen ist, wobei insbesondere das Reinwasser-Reservoir zum Rückspülen der Filter (29, 129, 151, 155) ausgebildet ist und das Schmutzwasser-Reservoir für den Behandlungsvorgang vorgesehen ist.

9. Haushaltsgerät nach Anspruch 7 oder 8, **dadurch gekennzeichnet, dass** der Grobfilterwasserauslass mittels eines Drei-Wege-Ventils (146b) oder eines Vier-Wege-Ventils zu dem Wasserreservoir (47, 147), insbesondere zu dem Reinwasser-Reservoir nach Anspruch 8, und zu der Behandlungskammer (14, 114) geführt ist, wobei vorzugsweise bei einem Drei-Wege-Ventil (146b) ein erster Weg zu dem Wasserreservoir (47, 147) führt und ein anderer zweiter Weg zu der Behandlungskammer (14, 114) führt.

10. Haushaltsgerät nach einem der Ansprüche 7 bis 9, **dadurch gekennzeichnet, dass** das Wasserreservoir (47, 147), insbesondere das Reinwasser-Reservoir nach Anspruch 8, mit zwei Wasserleitungen verbunden ist, wobei eine erste Wasserleitung über eine Ventileinrichtung zu dem Grobfilterwasserauslass führt, und eine zweite Wasserleitung über eine Ventileinrichtung (146b, 146c) an den Grobfilter (151) und/oder die Pumpe (40, 140) führt, vorzugsweise mittels eines Drei-Wege-Ventils oder mittels eines Vier-Wege-Ventils an alle drei.

11. Haushaltsgerät nach einem der vorhergehenden Ansprüche, **dadurch gekennzeichnet, dass** es eine Messkammer zur Untersuchung von Wasser und/oder Filtrat darin aufweist, wobei vorzugsweise die Messkammer einen Messkammereinlass aufweist und damit mit dem Grobfiltratauslass verbunden ist.

12. Haushaltsgerät nach einem der vorhergehenden Ansprüche, **dadurch gekennzeichnet, dass** die Pumpe (40, 140) hinter dem Grobteilfilter-Wasserauslass (31) angeordnet ist oder zwischen dem Sumpf-Wasserauslass bzw. dem Grobteilfilter-Wasserauslass (31) und dem Grobfiltereinlass angeordnet ist.

13. Verfahren zum Betrieb eines wasserführenden Haushaltsgeräts (11, 111) nach einem der vorhergehenden Ansprüche, **dadurch gekennzeichnet, dass** zum Umwälzen von Wasser im Haushaltsgerät (11, 111) beim Behandeln von Gegenständen in der Behandlungskammer (14, 114) Wasser zum Grobteilfilter-Wasserauslass (31) aus dem Sumpf (19, 119) austritt, durch den Grobteilfilter (29, 129) und durch die Pumpe (40, 140) fließt und von der Pumpe (40, 140) wieder zurück zum Kammer-Wassereinlass in die Behandlungskammer (14, 114) gepumpt wird.

14. Verfahren zum Betrieb eines wasserführenden Haushaltsgeräts (11, 111) nach einem der Ansprüche 1 bis 12, **dadurch gekennzeichnet, dass** zum Entfernen der Grobteile aus dem Grobteilfilter (29, 129) bzw. aus dem Haushaltsgerät (11, 111) beim Behandeln von Gegenständen in der Behandlungskammer (14, 114) zum Abpumpen von Wasser aus dem Sumpf (19, 119) und zum Reinigen der Grobteilfalle Wasser über den Grobteilfilter-einlass in den Grobteilfilter (29, 129) hineingepumpt wird und samt darin enthaltenen Grobteilen zum Grobteilfiltratauslass (32, 132) herausgeführt wird hin zum Abfluss-Auslass (38, 138) aus dem Haushaltsgerät (11, 111).

15. Verfahren zum Betrieb eines wasserführenden Haushaltsgeräts (11, 111) nach einem der Ansprüche 1 bis 12, **dadurch gekennzeichnet, dass** zum Abpumpen von Wasser aus dem Sumpf (19, 119) beim Behandeln von Gegenständen in der Behandlungskammer (14, 114) Wasser von der Pumpe (40, 140) am Grobteilfilter-Wasserauslass (31) des Sumpfes (19, 119) angesaugt wird und durch den Grobteilfilter (29, 129) und die Pumpe (40, 140) zum Abfluss-Auslass (38, 138) aus dem Haushaltsgerät (11, 111) herausgepumpt wird.

16. Verfahren zum Betrieb eines wasserführenden Haushaltsgeräts (11, 111) nach einem der Ansprüche 1 bis 12, **dadurch gekennzeichnet, dass** zum Entfernen der Grobteile aus dem Grobteilfilter (29, 129) bzw. aus dem Haushaltsgerät (11, 111) beim Behandeln von Gegenständen in der Behandlungskammer Wasser aus dem Wasserreservoir angesaugt wird, durch die Pumpe (40, 140) hinein in den Grobteilfilterwasserauslass des Grobteil-Filters gepumpt wird, wobei das Wasser samt darin gesammelten Grobteilen zum Grobteilfilterauslass aus dem Grobteilfilter (29, 129) austritt und mittels Wasserleitungen zum Abfluss-Auslass (38, 138) aus dem Haushaltsgerät (11, 111) gepumpt wird.

## Claims

1. A water-carrying household appliance (11, 111) comprising:
- a treatment chamber (14, 114) that is sealable and in which items can be treated,
- at least one chamber water inlet leading into the treatment chamber (14, 114),
- at least one sump (19, 119) at the bottom of the treatment chamber (14, 114) or beneath the treatment chamber (14, 114),
- a coarse-particle filter (29, 129) for separating coarse particles with a size of ≥ 5 mm from water in the treatment chamber (14, 114) or from water flowing out of the sump (19, 119), wherein the coarse-particle filter (29, 129) comprises a coarse-particle filter inlet (30), a coarse-particle filter water outlet (31, 131), and a coarse-particle filtrate outlet (32, 132),
- exactly one pump (40, 140) for the entire household appliance (11, 111), which is connected downstream of the sump (19, 119) and the coarse-particle filter water outlet (31, 131), wherein the pump (40, 140) comprises:
∘ a pump inlet (42, 142) and
∘ a pump outlet (43, 143),
- water lines (15, 35, 45, 49, 115, 135, 145, 149),
- valve devices (36, 41, 46, 136, 146),
- a drain outlet (38, 138) from the household appliance (11, 111),
- a water line (39, 139) from the coarse filter water outlet (31, 131) to the pump (40, 140) or to the pump inlet (42, 142),
- two chamber water outlets from the sump (19, 119), wherein:
∘ a coarse-particle chamber water outlet extends from the coarse-particle filter effluent outlet (32, 132) of the coarse-particle filter (29, 129) toward the drain outlet (38, 138),
∘ a standard chamber water outlet extends from the sump (19, 119), which is either separate from the coarse-particle filter (29, 129) or forms the coarse-particle filter water outlet (31, 131)
**characterized by** a coarse filter (151) for water from the treatment chamber (14, 114) having a coarse filter inlet, a coarse filter water outlet for coarsely filtered water, and a coarse filtrate outlet for coarse filtrate, wherein the coarse filter (151) is connected at its coarse filter inlet to the normal chamber water outlet by means of a water line (149).

2. Household appliance according to claim 1, **characterized in that** at least one, preferably at least some, of the valve devices (36, 41, 46, 136, 146) is designed as a shut-off valve and/or at least one, preferably at least some, of the valve devices (36, 41, 46, 136, 146) are configured as three-way valves (41, 146) and/or as four-way valves.

3. A household appliance according to claim 1 or 2, **characterized by** a water line (35) extending from the coarse-particle filter water outlet (31) and leading to the drain outlet (38).

4. A household appliance according to any one of the preceding claims, **characterized by** a water line (35) from the coarse-particle filter effluent outlet (32) leading to the drain outlet (38).

5. A household appliance according to one of the preceding claims, **characterized in that** the coarse filter (151) is backwashable to remove coarse filtrate from it via the coarse filtrate outlet, wherein the coarse filtrate outlet is connected via a water line to the drain outlet (138) of the household appliance (111) and/or to a measuring chamber.

6. A household appliance according to any of the preceding claims, **characterized in that** a water path is provided via water lines (39, 139) from the sump (19, 119) to the pump (40, 140) always via the coarse-particle filter (29, 129) and/or via the coarse filter (151), wherein the coarse-particle filter water outlet (31) and/or the coarse filter water outlet is connected to the pump inlet (42, 142).

7. A household appliance according to any one of the preceding claims, **characterized by** a water reservoir (47, 147) that can be connected via a water line to the chamber water inlet and/or via a water line to the pump (40, 140) and/or via a water line to a coarse-particle filter inlet (30) of the coarse-particle filter (29, 129) for introducing water into the coarse-particle filter (29, 129) to flush out coarse-particles contained therein from the coarse-particle filter outlet (32, 132) to the drain outlet (38, 138).

8. A household appliance according to claim 7, **characterized in that** a first water reservoir is a clean water reservoir and a second water reservoir is provided as a wastewater reservoir, wherein, in particular, the clean water reservoir is configured for backwashing the filters (29, 129, 151, 155), and the wastewater reservoir is provided for the treatment process.

9. A household appliance according to claim 7 or 8, **characterized in that** the coarse filter water outlet is routed via a three-way valve (146b) or a four-way valve to the water reservoir (47, 147)-in particular to the clean water reservoir according to claim 8-and to the treatment chamber (14, 114), wherein, preferably in the case of a three-way valve (146b), a first path leads to the water reservoir (47, 147) and a second path leads to the treatment chamber (14, 114).

10. A household appliance according to any one of claims 7 through 9, **characterized in that** the water reservoir (47, 147), in particular the clean water reservoir according to claim 8, is connected to two water lines, wherein a first water line leads via a valve assembly to the coarse filter water outlet, and a second water line leads via a valve assembly (146b, 146c) to the coarse filter (151) and/or the pump (40, 140), preferably via a three-way valve or via a four-way valve to all three.

11. A household appliance according to one of the preceding claims, **characterized in that** it comprises a measuring chamber for analyzing water and/or filtrate therein, wherein the measuring chamber preferably comprises a measuring chamber inlet and is connected thereto via the coarse filter outlet.

12. A household appliance according to one of the preceding claims, **characterized in that** the pump (40, 140) is arranged downstream of the coarse filter water outlet (31) or is arranged between the sump water outlet or the coarse filter water outlet (31) and the coarse filter inlet.

13. A method for operating a water-carrying household appliance (11, 111) according to one of the preceding claims, **characterized in that**, to circulate water within the household appliance (11, 111) while treating items in the treatment chamber (14, 114), water flows to the coarse filter water outlet (31) from the sump (19, 119), flows through the coarse-particle filter (29, 129) and through the pump (40, 140), and is pumped by the pump (40, 140) back to the chamber water inlet in the treatment chamber (14, 114).

14. A method for operating a water-carrying household appliance (11, 111) according to any one of claims 1 through 12, **characterized in that**, to remove coarse-particles from the coarse-particle filter (29, 129) or from the household appliance (11, 111) while treating items in the treatment chamber (14, 114), water is pumped into the coarse-particle filter (29, 129) via the coarse-particle filter inlet to pump water out of the sump (19, 119) and to clean the coarse-particle trap, and is then discharged, together with the coarse-particles it contains, to the coarse-particle filter effluent outlet (32, 132) and then to the drain outlet (38, 138) of the household appliance (11, 111).

15. A method for operating a water-carrying household appliance (11, 111) according to any one of claims 1 through 12, **characterized in that**, to pump water out of the sump (19, 119) while treating items in the treatment chamber (14, 114), water is drawn in by the pump (40, 140) at the coarse filter water outlet (31) of the sump (19, 119) and is pumped through the coarse-particle filter (29, 129) and the pump (40, 140) to the drain outlet (38, 138) out of the household appliance (11, 111).

16. A method for operating a water-carrying household appliance (11, 111) according to any one of claims 1 through 12, **characterized in that**, to remove coarse-particles from the coarse-particle filter (29, 129) or from the household appliance (11, 111), water is drawn in from the water reservoir while items are being treated in the treatment chamber, pumped by the pump (40, 140) into the coarse-particle filter water outlet of the coarse-particle filter, whereupon the water, together with the coarse-particles collected therein, flows out to the coarse-particle filter outlet from the coarse-particle filter (29, 129) and is pumped via water lines to the drain outlet (38, 138) of the household appliance (11, 111).

## Revendications

1. Appareil ménager utilisant de l'eau (11, 111) comprenant :
- une chambre de traitement (14, 114) pouvant être fermée et dans laquelle des objets peuvent être traités,
- au moins une entrée d'eau dans la chambre de traitement (14, 114),
- au moins un puisard (19, 119) situé au fond de la chambre de traitement (14, 114) ou sous celle-ci,
- un filtre à grosses particules (29, 129) destiné à retenir les grosses particules d'une taille ≥ 5 mm présentes dans l'eau de la chambre de traitement (14, 114) ou dans l'eau sortant du puisard (19, 119), le filtre à grosses particules (29, 129) comportant une entrée (30), une sortie d'eau (31, 131) et une sortie de filtrat (32, 132),
- exactement une seule pompe (40, 140) pour l'ensemble de l'appareil ménager (11, 111), qui est montée en aval du puisard (19, 119) et de la sortie d'eau du filtre à grosses particules (31, 131), la pompe (40, 140) comportant :
∘ une entrée de la pompe (42, 142) et
∘ une sortie de la pompe (43, 143),
- des conduites d'eau (15, 35, 45, 49, 115, 135, 145, 149),
- des dispositifs de vanne (36, 41, 46, 136, 146),
- une sortie d'évacuation (38, 138) de l'appareil ménager (11, 111),
- une conduite d'eau (39, 139) reliant la sortie d'eau du filtre à grosses particules (31, 131) à la pompe (40, 140) ou à l'entrée de la pompe (42, 142),
- deux sorties d'eau de la chambre provenant du puisard (19, 119), dans lesquelles :
∘ une sortie d'eau de la chambre des grosses particules part de la sortie de filtrat (32, 132) du filtre à grosses particules (29, 129) vers la sortie d'évacuation (38, 138),
∘ une sortie d'eau de la chambre normale part du puisard (19, 119), qui est soit séparée du filtre à grosses particules (29, 129), soit constitue la sortie d'eau du filtre à grosses particules (31, 131)
**caractérisé par** un filtre grossier (151) pour l'eau provenant de la chambre de traitement (14, 114), comportant une entrée de filtre grossier, une sortie d'eau du filtre grossier pour l'eau filtrée grossièrement et une sortie de filtrat grossier pour le filtrat grossier, le filtre grossier (151) étant relié, au niveau de son entrée, à la sortie d'eau de la chambre normale au moyen d'une conduite d'eau (149).

2. Appareil ménager selon la revendication 1, **caractérisé en ce qu'**au moins un, de préférence au moins certains, des dispositifs de vanne (36, 41, 46, 136, 146) est conçu comme une vanne d'arrêt et/ou au moins un, de préférence au moins certains, des dispositifs de vanne (36, 41, 46, 136, 146) sont conçus comme des vannes à trois voies (41, 146) et/ou comme des vannes à quatre voies.

3. Appareil ménager selon la revendication 1 ou 2, **caractérisé par** une conduite d'eau (35) partant de la sortie d'eau du filtre à grosses particules (31) et menant à la sortie d'évacuation (38).

4. Appareil ménager selon l'une des revendications précédentes, **caractérisé par** une conduite d'eau (35) partant de la sortie du filtrat du filtre à grosses particules (32) et menant à la sortie d'évacuation (38).

5. Appareil ménager selon l'une des revendications précédentes, **caractérisé en ce que** le filtre grossier (151) est lavable à contre-courant pour éliminer le filtrat grossier de celui-ci par la sortie de filtrat grossier, la sortie de filtrat grossier étant reliée, au moyen d'une conduite d'eau, à la sortie d'évacuation (138) de l'appareil ménager (111) et/ou à une chambre de mesure.

6. Appareil ménager selon l'une des revendications précédentes, **caractérisé en ce qu'**un circuit d'eau est établi au moyen de conduites d'eau (39, 139) allant du puisard (19, 119) à la pompe (40, 140) en passant toujours par le filtre à grosses particules (29, 129) et/ou par le filtre grossier (151), la sortie d'eau du filtre à grosses particules (31) et/ou la sortie d'eau du filtre grossier étant reliée à l'entrée de la pompe (42, 142).

7. Appareil ménager selon l'une des revendications précédentes, **caractérisé par** un réservoir d'eau (47, 147) pouvant être raccordé, au moyen d'une conduite d'eau, à l'entrée d'eau de la chambre et/ou, au moyen d'une conduite d'eau, à la pompe (40, 140) et/ou, au moyen d'une conduite d'eau, à une entrée du filtre à grosses particules (30) du filtre à grosses particules (29, 129) afin d'introduire de l'eau dans le filtre à grosses particules (29, 129) pour évacuer les grosses particules qui s'y trouvent depuis la sortie du filtrat du filtre à grosses particules (32, 132) vers la sortie d'évacuation (38, 138).

8. Appareil ménager selon la revendication 7, **caractérisé en ce qu'**un premier réservoir d'eau est un réservoir d'eau propre et qu'un deuxième réservoir d'eau est prévu comme réservoir d'eau usée, le réservoir d'eau propre étant notamment conçu pour le rinçage à contre-courant des filtres (29, 129, 151, 155) et que le réservoir d'eaux usées est prévu pour le processus de traitement.

9. Appareil ménager selon la revendication 7 ou 8, **caractérisé en ce que** la sortie d'eau du filtre grossier est reliée, au moyen d'une vanne à trois voies (146b) ou d'une vanne à quatre voies, au réservoir d'eau (47, 147), en particulier au réservoir d'eau propre selon la revendication 8, et à la chambre de traitement (14, 114), de préférence, dans le cas d'une vanne à trois voies (146b), une première voie menant au réservoir d'eau (47, 147) et une deuxième voie menant à la chambre de traitement (14, 114).

10. Appareil ménager selon l'une des revendications 7 à 9, **caractérisé en ce que** le réservoir d'eau (47, 147), en particulier le réservoir d'eau pure selon la revendication 8, est relié à deux conduites d'eau, une première conduite d'eau menant, via un dispositif de vanne, à la sortie d'eau du filtre grossier, et une deuxième conduite d'eau menant, via un dispositif de vanne (146b, 146c) vers le filtre grossier (151) et/ou la pompe (40, 140), de préférence au moyen d'une vanne à trois voies ou d'une vanne à quatre voies vers les trois éléments.

11. Appareil ménager selon l'une des revendications précédentes, **caractérisé en ce qu'**il comporte une chambre de mesure destinée à l'analyse de l'eau et/ou du filtrat, la chambre de mesure comportant de préférence une entrée de chambre de mesure et étant ainsi reliée à la sortie du filtrat grossier.

12. Appareil ménager selon l'une des revendications précédentes, **caractérisé en ce que** la pompe (40, 140) est disposée en aval de la sortie d'eau du filtre à grosses particules (31) ou entre la sortie d'eau du puisard ou la sortie d'eau du filtre à grosses particules (31) et l'entrée du filtre grossier.

13. Procédé de fonctionnement d'un appareil ménager utilisant de l'eau (11, 111) selon l'une des revendications précédentes, **caractérisé en ce que**, pour faire circuler l'eau dans l'appareil ménager (11, 111) lors du traitement d'objets dans la chambre de traitement (14, 114), l'eau s'écoule vers la sortie d'eau du filtre à grosses particules (31) depuis le puisard (19, 119), s'écoule à travers le filtre à grosses particules (29, 129) et à travers la pompe (40, 140), puis est renvoyée par la pompe (40, 140) vers l'entrée d'eau de la chambre de traitement (14, 114).

14. Procédé de fonctionnement d'un appareil ménager utilisant de l'eau (11, 111) selon l'une des revendications 1 à 12, **caractérisé en ce que**, pour éliminer les grosses particules du filtre à grosses particules (29, 129) ou de l'appareil ménager (11, 111) lors du traitement d'objets dans la chambre de traitement (14, 114), de l'eau est pompée via l'entrée du filtre à grosses particules dans ledit filtre (29, 129) afin de vidanger l'eau de du puisard (19, 119) et de nettoyer le piège à grosses particules, puis, avec les grosses particules qu'elle contient, elle est évacuée vers la sortie de filtrat du filtre à grosses particules (32, 132) vers la sortie d'évacuation (38, 138) de l'appareil ménager (11, 111).

15. Procédé de fonctionnement d'un appareil ménager utilisant de l'eau (11, 111) selon l'une des revendications 1 à 12, **caractérisé en ce que**, pour pomper l'eau hors du puisard (19, 119) lors du traitement d'objets dans la chambre de traitement (14, 114), l'eau est aspirée par la pompe (40, 140) au niveau de la sortie d'eau du filtre à grosses particules (31) du puisard (19, 119) et est évacuée par la pompe (40, 140) à travers le filtre à grosses particules (29, 129) vers la sortie d'évacuation (38, 138) hors de l'appareil ménager (11, 111).

16. Procédé de fonctionnement d'un appareil ménager utilisant de l'eau (11, 111) selon l'une des revendications 1 à 12, **caractérisé en ce que**, pour éliminer les grosses particules du filtre à grosses particules (29, 129) ou de l'appareil ménager (11, 111) lors du traitement d'objets dans la chambre de traitement, de l'eau est aspirée depuis le réservoir d'eau, puis pompée par la pompe (40, 140) vers la sortie d'eau du filtre à grosses particules, l'eau, ainsi que les grosses particules qui s'y sont accumulées, s'écoulant vers la sortie du filtre à grosses particules (29, 129) et est évacuée hors de l'appareil ménager (11, 111) vers la sortie d'évacuation (38, 138) par des conduites d'eau.
